# EUROPEAN PATENT SPECIFICATION

(11) **EP 3 643 212 B1**
(45) Date of publication and mention of the grant of the patent: **27.07.2022**
(21) Application number: 18201817.6
(22) Date of filing: 22.10.2018
(51) Int. Cl.: A47J 31/44, A47J 31/52

(54) **COFFEE MACHINE WITH WATER DISPENSER**
KAFFEEMASCHINE MIT WASSERSPENDER
MACHINE À CAFÉ AVEC DISTRIBUTEUR D'EAU

(43) Date of publication of application: 29.04.2020
(73) Proprietor: ELECTROLUX APPLIANCES AKTIEBOLAG, 105 45 Stockholm (SE)
(72) Inventor: ANDERSSON, Martin, 105 45 Stockholm (SE); LEFFLER, Jens, 10 545 Stockholm (SE)
(74) Representative: Electrolux Group Patents

(56) References cited:
- EP-A1- 2 898 801
- WO-A1-2018/001499
- DE-A1-102015 121 048
- US-A1- 2004 194 631

## Description

### TECHNICAL FIELD

The invention relates to a coffee machine and to a water dispenser nozzle therefor.

### BACKGROUND

Today, when drip coffee is brewed in a coffee machine, a user typically pours an amount of water in a water container depending on how much coffee the user wishes to brew. One problem with such a coffee machine is that the brewing is typically optimized for a full water container and when the container is not full resulting coffee quality become sub-optimal.

WO 2018/001499 describes a known coffee machine.

US2004/194631A1 relates to a method and apparatus for brewing a brewing substance. The apparatus including a liquid conduit for supplying a brewing liquid, a liquid permeable container for retaining the brewing substance and allowing the brewed liquid to pass through, a spray member for delivering the brewing liquid from the liquid conduit to a brewing substance and discharging the brewing liquid into the liquid permeable container, a liquid flow modifier for varying the flow rate of liquid at the spray member, and a control member operably connected to the liquid flow modifying member for causing the liquid flow modifying member to vary the liquid flow rate. The alteration of the discharge of the liquid from at least a first spray pattern to at least a second spray pattern facilitating mixing of the brewing liquid and brewing substance within the liquid permeable container.

There is a constant desire to improve various aspects of a coffee machine to improve the quality of the coffee brewed.

### SUMMARY

It is an object of the present invention to provide an improved coffee machine and also an improved water dispenser for a coffee machine.

This object and/or others are obtained by a device as set out in the appended claims.

In accordance with the invention a coffee machine is provided. The coffee machine comprises a water reservoir arranged to provide water for brewing coffee, and a water dispenser having a water dispenser nozzle with fixed openings. The coffee machine also comprises a container arranged to receive the water and to hold a coffee substance. The coffee machine is arranged to generate a variable flow speed of water comprising at least a first flow speed of water and a second flow speed of water, wherein the water dispenser is configured to discharge water in a first water discharge pattern when fed with said first flow speed of water and a second water discharge pattern when fed with said second flow speed of water. Hereby it is obtained that different water patterns can be discharged from the water dispenser depending on the flow speed of water supplied to the water dispenser. This results in that the water discharge pattern can be controlled by controlling the flow speed of water. Thus, different water patterns can easily be generated which can be used to match the water discharge pattern to the surface of coffee substance in the container that the water is discharged upon. For example, when a small amount of coffee is to be brewed a small amount of coffee substance with a small upper surface can be placed in the container. The water can then be discharged with a pattern spreading over a small surface. Because the water will be spread over a small area the water temperature can be made high even with a low flow which in turn improves the quality of the coffee brewed. On the other hand, when a large amount of coffee is to be brewed and the upper surface of coffee substance is larger, the discharge patter can be made to spread over a larger surface. Hereby the coffee brewed can always be made with a water discharge that is suitable for the amount of coffee being brewed.

In accordance with one embodiment, a switch mechanism to switch the flow speed of water to vary the flow speed of water is provided. Hereby an easy to implement mechanism that can be used to control the amount of water can be provided.

In accordance with one embodiment, a water flow pulse generator to pulsate the flow speed of water to vary the flow speed of water. Hereby an alternative mechanism to control the flow speed of water can be implemented.

In accordance with one embodiment, the first flow speed of water is higher than said second flow speed of water and the water dispenser is configured to discharge water over a larger area of the container when fed with said first flow speed of water. Hereby a mechanism whereby a controlled higher speed of water can generate a discharge pattern that is larger can be obtained.

In accordance with the invention, the first flow speed of water is higher than said second flow speed of water and wherein the water dispenser is configured to discharge water in a single stream of water into the container when fed with the second flow speed of water. Hereby an efficient water discharge pattern for brewing small amounts of coffee can be obtained.

In accordance with one embodiment, the water dispenser nozzle is provided with openings projecting at an offset angle from a vertical direction when the coffee machine is in use. In particular, the water dispenser nozzle can be cup-shaped with at least two openings on the side wall of the nozzle. Hereby a nozzle configuration that is easy to control the discharge pattern from is provided.

In accordance with one embodiment, a pump is provided to move water from the water reservoir to the water dispenser. Hereby an implementation whereby the speed of water flow is easy to control can be implemented.

In accordance with one embodiment, a control unit arranged to control the pump to generate the variable flow speed of water is provided. Hereby the control mechanism for controlling the water flow can be automated and no manual control of the pump to generate the correct flow speed of water needs to be made.

In accordance with one embodiment, the pump is configured to be set manually to generate said variable flow speed of water. Hereby a control of the pump can be achieved without having to implement a controller.

In accordance with one embodiment, the water dispenser nozzle has at least four openings and wherein said openings are round. Hereby an efficient configuration for discharging water from the nozzle can be obtained.

### BRIEF DESCRIPTION OF THE DRAWINGS

The invention will now be described in more detail, by way of example, and with reference to the accompanying drawings, in which:
Fig. 1 shows a general view of a coffee machine,
Figs. 2 - 5 illustrate a water dispenser according to a first embodiment,
Figs. 6 - 8 illustrate a water dispenser according to a second embodiment, wherein said embodiment does not fall within the scope of the independent claim,
and
Figs. 9 - 10 illustrate a water dispenser according to a third embodiment.

### DETAILED DESCRIPTION

The invention will now be described more fully hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of the invention to those skilled in the art. For example, like or similar components of different embodiments can be exchanged between different embodiments. For example, the coffee machine described herein is fully automated. However, it is envisaged that some control can be made manually. For example, the water flow speed can be set manually. Some components can be omitted from different embodiments. Like numbers refer to like elements throughout the description.

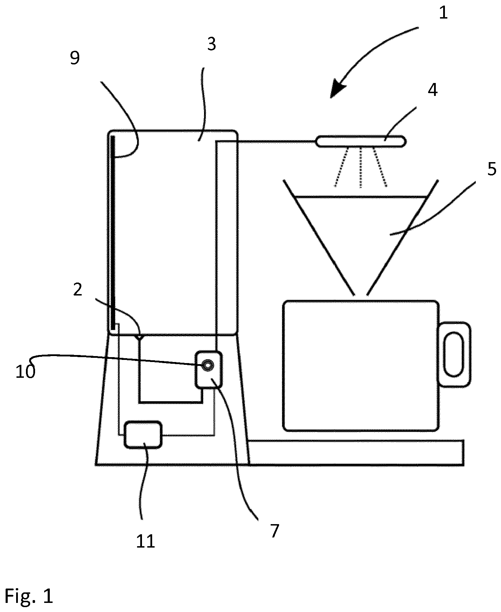

Fig. 1 illustrates a coffee machine 1 comprising: a water reservoir 3 arranged to provide water for brewing coffee, a container 5 arranged to receive the water and to hold a coffee substance, a pump 7 or similar means arranged to pump the water from the water reservoir 3 to the container 5. In accordance with some embodiments a measuring means 9 is arranged to measure an amount of water to be brewed in the water reservoir 3. In other words, the measuring means 9 is arranged to measure a level of water in the water reservoir 3. As can be seen in the Fig. 1, the water reservoir 3 comprises an outlet 2 through which the water is pumped out from the water reservoir 3 by the pump 7. Further, the water passes the pump 7 and flows to a dispenser 4 arranged to discharge the water into the container 5. During passage of the water from the reservoir 3 to the container 5, the water is heated in some conventional manner.

The measuring means 9 can, when included, comprise any known type of sensor for measuring a level, i.e. amount or volume of water in the reservoir 3, such as a capacitive sensor, a float sensor, or the like.

The measuring means 9 may also be arranged to measure an actual flow speed of water from the water reservoir 3 to the container 5. In order to measure the actual flow speed of water, the measuring means 9 may repeatedly measure the amount of water while keeping track of time between such measurements. Hence, a measure of the actual flow speed of water may be obtained, e.g. by calculation in a control unit 11.

The flow of water, i.e. the water flow speed can alternatively be set in other ways. For example, the pump can be controlled by the control unit 11 to different pump speeds corresponding to different water flow speeds. In accordance with one embodiment, the pump is set to work in at least two modes of operation, a first, mode where water is pumped at a first relatively high speed and a second mode where water is pumped at a first relatively low speed. The first mode can be used when the reservoir is full of water or close to full ow water implying that many cups of coffee are to be brewed. The second mode can be used when the amount of water in the reservoir is below some threshold such as less than half full of water. The setting of the water flow speed can be manual and set by a user or automatic based on a water level sensor value from the measuring means 9.

Accordingly, as illustrated in the exemplary embodiment in Fig. 1, the coffee machine 1 comprises the control unit 11 arranged to control the pump 7 to generate a desired flow speed of water. The desired flow speed and the actual flow speed described above refer to a volume of water per a time unit as for example ml/s. The control unit 11 may be arranged to control the pump 7 by controlling a speed of the pump 7. The speed of the pump 7, e.g. number of revolutions or frequency, may be caused by an electric motor (not shown) arranged to drive the pump 7. The electric motor may be provided as an integral part of the pump 7, or as an external part of the pump 7. The speed of the water pump 7 causes a certain flow of the water in the coffee machine. The pump 7 is controlled to generate the desired flow speed of water based on: the amount of water to be brewed measured by the measuring means 9, a predetermined period of time, and the actual flow speed measured by the measuring means 9. The amount of water to be brewed refers to the amount of water to be brewed into coffee, e.g. after the water has passed the coffee substance in the container 5. The pump 7 is controlled to provide the amount of water to the container 5 during the predetermined period of time. The pump 7 may be a piston pump, a heat driven pump, a boiler pump or the like. The predetermined period of time is a time range that may be programed in the control unit. Usually, the predetermined period of time is in a range of 2-5 min.

As illustrated in Fig. 1, the control unit 11 is connected, e.g. electrically connected, to the measuring means 9 and to the pump 7. Thus, the control unit 11 may electrically measure the amount of water in the reservoir 3 and the actual flow speed of water from the reservoir 3 to the container 5. For example, the control unit 11 may receive signals, from the measuring means 9, about the amount of water and the actual flow speed. Information about the amount of water and about the actual flow speed of water together with a known value of the predetermined time can in accordance with some embodiments be used to calculate the desired flow speed of water that the pump 7 needs to achieve, or generate, such that the amount of water will be pumped during said predetermined period of time.

An exemplary operation of the coffee machine 1 will be now described in more detail.

When a start button (not shown) is pressed, the control unit 11 checks the water level in the reservoir 3, i.e. the amount of water in the reservoir 3 is measured by the measuring means 9 and received by the control unit 11 connected to the measuring means 9. The control unit 11 calculates a desired flow speed of water to enable pumping the amount of water during said predetermined period of time. Alternatively, a flow speed is manually set by a user, this can be performed by setting the pump in one of at least two modes of operation as described above.

Different number of cups of coffee desired to be brewed in the coffee machine requires different amount of water. The different amount of water in the container 5 implies that a time during which the water is in contact with the coffee substance in the container 5 to brew coffee may be different. This time is typically referred to as contact time. Quality of coffee brewed in the coffee machine may be dependent on the contact time. To improve the quality of coffee brewed in the coffee machine the flow speed of water can be varied to provide different discharge patterns from the water dispenser in response to the amount of coffee to be brewed. The variation of water flow speed can comprise at least a first flow speed of water and a second flow speed of water. The water dispenser 4 is configured to discharge water in different discharge patterns when fed with the different water flow speeds. Typically, the different discharge pattern will cause water to be discharged over different large areas of the container 5. Depending on the amount of coffee to be brewed, the coffee substance placed in the container will typically have different large upper surface. The container 5 will typically have a V-shaped form such that when more coffee is to be brewed, the container will have more coffee substance therein resulting in a larger top surface of coffee substance that the water is discharged upon. The different water flow speeds can be set by a switch 10. The switch 10 can be connected to the pump 7. By manipulating the switch 10 a switch mechanism can change the flow speed of water to vary the flow speed of water. In accordance with one embodiment, a water flow pulse generator (not shown) is used to pulsate the flow speed of water to vary the flow speed of water. The pulsing water flow speed can vary in a waveform having a maximum speed of water flow and a minimum speed of water flow. The water flow speed can vary between these max and min speeds in, for example, sinus wave formed flow variation.

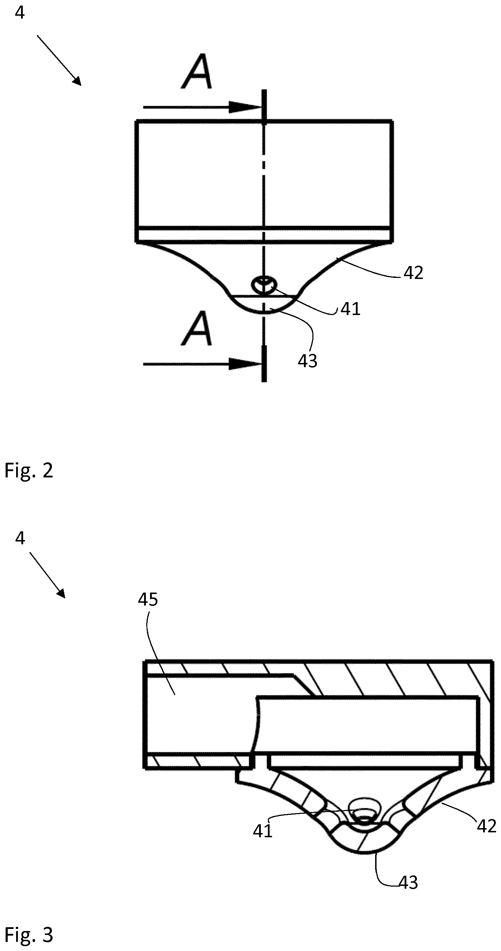

In Fig. 2 a water dispenser 4 in accordance with a first embodiment is depicted. The water dispenser 4 is configured to discharge water over a larger area of the container when fed with a first flow speed of water. This is achieved in that when a high speed of water flow enters the water dispenser 4 the water will have a relatively high pressure and water will be ejected out from openings 41 provided on the dispenser nozzle 44 water dispenser 4. The openings 41 have a fixed size and can preferably be round. On the other hand, when water is supplied at a low speed of water pressure the water will have relatively low pressure and the water exiting the openings 41 will not be ejected out from the openings 41, but instead follow the outside wall 42 of the water dispenser nozzle 44 and drip down from the bottom section 43 of the water dispenser nozzle 44 in a single stream of water into the container.

To provide a good spread of water ejected at high water pressure, the dispenser 4 can be provided with openings 41 projecting at an offset angle from a vertical direction when the coffee machine 1 is in use. This is shown better in Fig. 3 which is a sectional view of the section A- A in Fig. 2. Fig 3 also shows the water supply line 45 to the water dispenser 4.

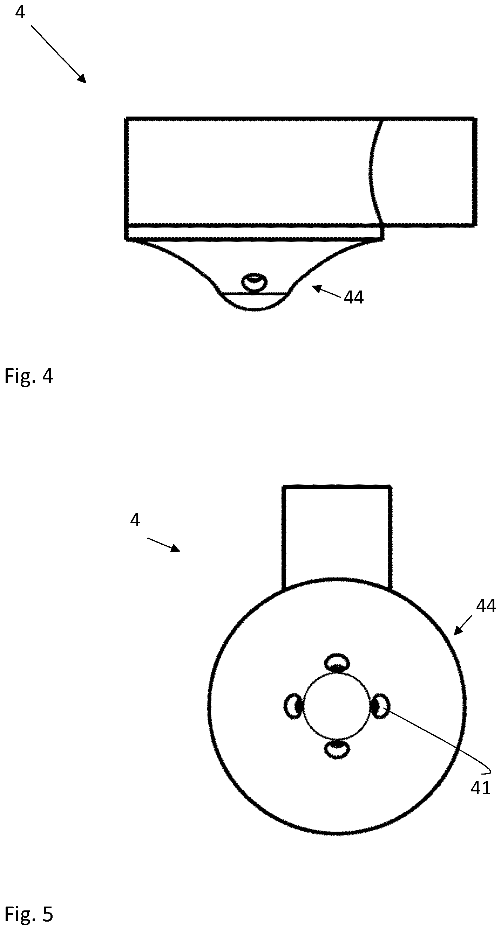

In accordance with the embodiment shown in Figs. 2 - 5, the water dispenser has a water dispenser nozzle 44 that is cup-shaped, see e.g. Fig. 4. The number of openings 41 on the nozzle can be set according to design preferences. It can be advantageous to have at least two openings on the side wall of the water dispenser nozzle. In accordance with one embodiment four openings are provided on the water dispenser nozzle as is seen in Fig. 5 which is a bottom view from the outside of the water dispenser 4 with the water dispenser nozzle 44. The openings 41 can advantageously be round.

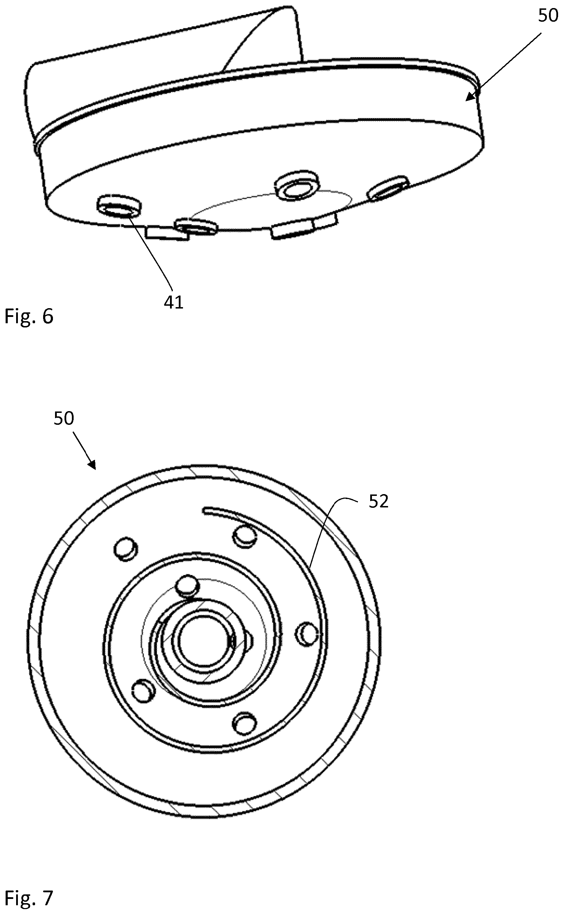

In Fig. 6 a water dispenser nozzle 50 according to a second embodiment is depicted. The embodiment of Fig. 6 has the openings 41 provided at different heights in the nozzle 50. Hereby the pattern ejected from the nozzle will vary when the water flow speed varies. This is because a higher water flow will increase the water level in the nozzle and thereby the pressure will increase.

Also, water will come to be ejected from openings higher up in the nozzle when the water level in the water dispenser nozzle 50 raises.

In Fig 7, a top view showing the inside of the water dispenser nozzle 50 is depicted. As can be seen water guides 52 are provided to guide the water on the inside of the water dispenser nozzle 50. The water guide can contribute to improve the water flow inside the water dispenser nozzle 50.

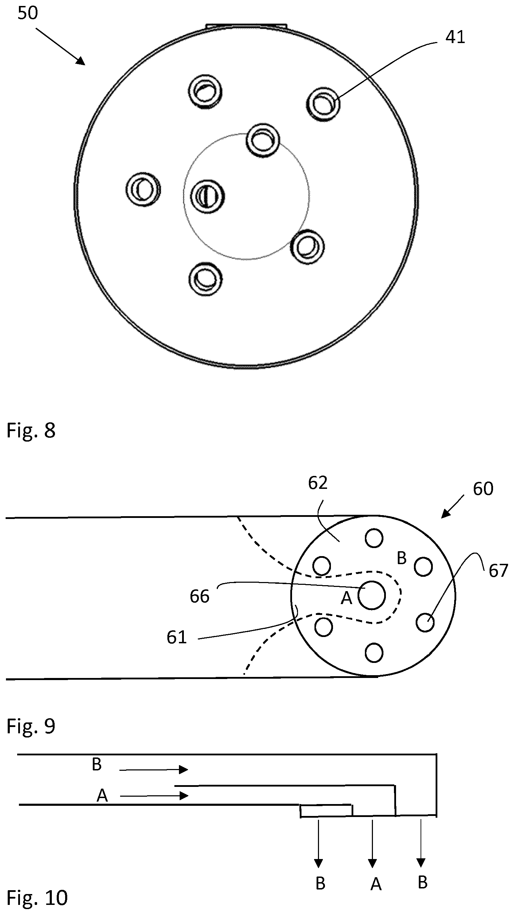

Fig. 8 is a bottom view from the outside of the water dispenser nozzle 50 is shown. As can be seen the openings 41 can be located on different heights can also be provided asymmetrically on the wall of the water dispenser nozzle 50.

In Fig. 9 a water dispenser nozzle 60 according to a third embodiment is shown. The water dispenser nozzle 60 has two separated compartments 61 and 62. The inner compartment has an inner opening 66 and the outer compartment has outer openings 67.

Fig. 10 illustrate the water supply to the water dispenser nozzle 60. When the waterflow is low, the water will go in channel A and out in the inner (center) opening 66 (only). When the flow is high (above a threshold value), water will go in both channel A and channel B and out through all openings 66, 67.

## Claims

1. A coffee machine (1) comprising:
a water reservoir (3) arranged to provide water for brewing coffee,
a water dispenser (4) having a water dispenser nozzle (44, 50, 60) with fixed openings (41, 66, 67),
a container (5) arranged to receive the water and to hold a coffee substance,
wherein said coffee machine (1) is arranged to generate a variable flow speed of water comprising at least a first flow speed of water and a second flow speed of water, and
wherein said water dispenser (4) is configured to discharge water in a first water discharge pattern when fed with said first flow speed of water and a second water discharge pattern when fed with said second flow speed of water,
**characterized in that** said first flow speed of water is higher than said second flow speed of water and wherein the water dispenser (4) is configured to discharge water in a single stream of water into the container (5) when fed with said second flow speed of water.

2. The coffee machine (1) according to claim 1, comprising a switch mechanism (10) to switch the flow speed of water to vary the flow speed of water.

3. The coffee machine (1) according to claim 1 or 2, comprising a water flow pulse generator to pulsate the flow speed of water to vary the flow speed of water.

4. The coffee machine (1) according to any one of claims 1 - 3, wherein said first flow speed of water is higher than said second flow speed of water and wherein the water dispenser (4) is configured to discharge water over a larger area of the container (5) when fed with said first flow speed of water.

5. The coffee machine (1) according to any one of claims 1 - 4, wherein the water dispenser nozzle (44, 50) is provided with openings projecting at an offset angle from a vertical direction when the coffee machine is in use.

6. The coffee machine (1) according to claim 5, wherein the water dispenser nozzle (44, 50) is cup-shaped with at least two openings on the side wall of the dispenser nozzle (44, 50).

7. The coffee machine (1) according to any one of claims 1 - 6, comprising a pump (7) to move water from the water reservoir (3) to the water dispenser (4).

8. The coffee machine (1) according to claim 7, further comprising a control unit (11) arranged to control said pump (7) to generate said variable flow speed of water.

9. The coffee machine (1) according to claim 7, wherein the pump (7) is configured to be set manually to generate said variable flow speed of water.

10. The coffee machine (1) according to any one of claims 1 - 9, wherein said water dispenser nozzle (44, 50) has at least four openings and wherein said openings are round.

## Patentansprüche

1. Kaffeemaschine (1), umfassend:
einen Wassertank (3), der dazu angeordnet ist, Wasser zur Kaffeezubereitung bereitzustellen,
eine Wasserabgabevorrichtung (4), die eine Wasserabgabedüse (44, 50, 60) mit festen Öffnungen (41, 66, 67) aufweist,
einen Behälter (5), der dazu angeordnet ist, das Wasser zu empfangen und eine Kaffeesubstanz zu halten, wobei die Kaffeemaschine (1) dazu angeordnet ist, eine variable Wasserdurchflussgeschwindigkeit zu erzeugen, die mindestens eine erste Wasserdurchflussgeschwindigkeit und eine zweite Wasserdurchflussgeschwindigkeit umfasst, und wobei die Wasserabgabevorrichtung (4) dafür ausgelegt ist, Wasser in einem ersten Wasserabgabemuster abzugeben, wenn sie mit der ersten Wasserdurchflussgeschwindigkeit gespeist wird, und in einem zweiten Wasserabgabemuster, wenn sie mit der zweiten Wasserdurchflussgeschwindigkeit gespeist wird,
**dadurch gekennzeichnet, dass** die erste Wasserdurchflussgeschwindigkeit höher ist als die zweite Wasserdurchflussgeschwindigkeit und wobei die Wasserabgabevorrichtung (4) dafür ausgelegt ist, Wasser in einem einzelnen Wasserstrom in den Behälter (5) abzugeben, wenn sie mit der zweiten Wasserdurchflussgeschwindigkeit gespeist wird.

2. Kaffeemaschine (1) nach Anspruch 1, umfassend einen Schaltmechanismus (10) zum Schalten der Wasserdurchflussgeschwindigkeit, zu dem Zweck, die Wasserdurchflussgeschwindigkeit zu variieren.

3. Kaffeemaschine (1) nach Anspruch 1 oder 2, umfassend einen Wasserdurchflussimpulsgeber zum Pulsieren der Wasserdurchflussgeschwindigkeit, zu dem Zweck, die Wasserdurchflussgeschwindigkeit zu variieren.

4. Kaffeemaschine (1) nach einem der Ansprüche 1 bis 3, wobei die erste Wasserdurchflussgeschwindigkeit höher ist als die zweite Wasserdurchflussgeschwindigkeit und wobei die Wasserabgabevorrichtung (4) dafür ausgelegt ist, Wasser über einen größeren Bereich des Behälters (5) abzugeben, wenn sie mit der ersten Wasserdurchflussgeschwindigkeit gespeist wird.

5. Kaffeemaschine (1) nach einem der Ansprüche 1 bis 4, wobei die Wasserabgabedüse (44, 50) mit Öffnungen bereitgestellt ist, die in einem versetzten Winkel aus einer vertikalen Richtung herausragen, wenn die Kaffeemaschine in Gebrauch ist.

6. Kaffeemaschine (1) nach Anspruch 5, wobei die Wasserabgabedüse (44, 50) becherförmig ist und mindestens zwei Öffnungen an der Seitenwand der Abgabedüse (44, 50) aufweist.

7. Kaffeemaschine (1) nach einem der Ansprüche 1 bis 6, umfassend eine Pumpe (7) zum Fördern von Wasser aus dem Wassertank (3) zur Wasserabgabevorrichtung (4).

8. Kaffeemaschine (1) nach Anspruch 7, ferner umfassend eine Steuereinheit (11), die dazu angeordnet ist, die Pumpe (7) zu dem Zweck zu steuern, die variable Wasserdurchflussgeschwindigkeit zu erzeugen.

9. Kaffeemaschine (1) nach Anspruch 7, wobei die Pumpe (7) dafür ausgelegt ist, manuell dazu eingestellt zu werden, die variable Wasserdurchflussgeschwindigkeit zu erzeugen.

10. Kaffeemaschine (1) nach einem der Ansprüche 1 bis 9, wobei die Wasserabgabedüse (44, 50) mindestens vier Öffnungen aufweist und wobei die Öffnungen rund sind.

## Revendications

1. Machine à café (1), comprenant :
un réservoir d'eau (3) agencé pour fournir de l'eau pour faire du café,
un distributeur d'eau (4) ayant une buse de distributeur d'eau (44, 50, 60) avec des ouvertures fixes (41, 66, 67),
un récipient (5) agencé pour recevoir l'eau et pour contenir une substance de café,
dans laquelle ladite machine à café (1) est agencée pour générer une vitesse d'écoulement variable d'eau comprenant au moins une première vitesse d'écoulement d'eau et une seconde vitesse d'écoulement d'eau, et dans laquelle ledit distributeur d'eau (4) est configuré pour faire sortir de l'eau dans une première configuration de sortie d'eau, lors de l'alimentation en utilisant ladite première vitesse d'écoulement d'eau, et un seconde configuration de sortie d'eau, lors de l'alimentation en utilisant ladite seconde vitesse d'écoulement d'eau,
**caractérisée en ce que** ladite première vitesse d'écoulement d'eau est plus haute que ladite seconde vitesse d'écoulement d'eau et dans laquelle le distributeur d'eau (4) est configuré pour faire sortir l'eau en un courant unique d'eau dans le récipient (5) lors de l'alimentation en utilisant ladite seconde vitesse d'écoulement d'eau.

2. Machine à café (1) selon la revendication 1, comprenant un mécanisme de permutation (10) pour permuter la vitesse d'écoulement d'eau pour varier la vitesse d'écoulement d'eau.

3. Machine à café (1) selon la revendication 1 ou 2, comprenant un générateur d'impulsion d'écoulement d'eau pour faire puiser la vitesse d'écoulement d'eau pour varier la vitesse d'écoulement d'eau.

4. Machine à café (1) selon l'une quelconque des revendications 1 à 3, dans laquelle ladite première vitesse d'écoulement d'eau est plus haute que ladite seconde vitesse d'écoulement d'eau et dans laquelle le distributeur d'eau (4) est configuré pour faire sortir de l'eau par-dessus une zone plus grande du récipient (5), lors de l'alimentation en utilisant ladite première vitesse d'écoulement d'eau.

5. Machine à café (1) selon l'une quelconque des revendications 1 à 4, dans laquelle la buse de distributeur d'eau (44, 50) est pourvue d'ouvertures faisant saillie à un angle décalé par rapport à une direction verticale lorsque la machine à café est utilisée.

6. Machine à café (1) selon la revendication 5, dans laquelle la buse de distributeur d'eau (44, 50) est en forme de coupelle avec au moins deux ouvertures sur la paroi latérale de la buse de distributeur (44, 50).

7. Machine à café (1) selon l'une quelconque des revendications 1 à 6, comprenant une pompe (7) pour déplacer de l'eau depuis le réservoir d'eau (3) jusqu'au distributeur d'eau (4).

8. Machine à café (1) selon la revendication 7, comprenant en outre une unité de commande (11) agencée pour commander ladite pompe (7) pour générer ladite vitesse d'écoulement variable d'eau.

9. Machine à café (1) selon la revendication 7, dans laquelle la pompe (7) est configurée pour être réglée manuellement pour générer ladite vitesse d'écoulement variable d'eau.

10. Machine à café (1) selon l'une quelconque des revendications 1 à 9, dans laquelle ladite buse de distributeur d'eau (44, 50) a au moins quatre ouvertures et dans laquelle lesdites ouvertures sont rondes.
